# FASCICULE DE BREVET EUROPEEN

(11) **EP 0 940 294 B1**
(45) Date de publication et mention de la délivrance du brevet: **24.04.2002**
(21) Numéro de dépôt: 99440020.8
(22) Date de dépôt: 02.02.1999
(51) Int. Cl.: B60R 1/06

(54) **Dispositif d'étanchéité pour rétroviseur extérieur, en particulier de véhicule automobile**
Dichtung für einen Aussenrückblickspiegel, insbesondere für Kraftfahrzeuge
Gasket for exterior rear view mirror, in particular for a vehicle

(30) Priorité: 06.03.1998 FR 9802939
(43) Date de publication de la demande: 08.09.1999
(73) Titulaire: MAGNETI MARELLI FRANCE, 92000 Nanterre (FR)
(72) Inventeur: Fanelli, Philippe, 89140 Gisy Les Nobles (FR); Navez, Laurent, 57560 Quirin (FR)
(74) Mandataire: Nuss, Pierre

(56) Documents cités:
- FR-A- 2 711 594
- GB-A- 2 318 334

## Description

La présente invention concerne le domaine de la fabrication des accessoires pour l'industrie automobile, en particulier des rétroviseurs, notamment des rétroviseurs extérieurs et a pour objet un dispositif d'étanchéité pour de tels rétroviseurs.

Les véhicules automobiles sont généralement équipés de deux rétroviseurs extérieurs fixés chacun sur une portière avant, de préférence dans un triangle de porte, au moyen d'une plaque de montage appropriée. Un tel montage est satisfaisant quant à la solution technique proposée et permet une installation de miroir orientable à distance.

Afin de respecter la réglementation en vigueur et de permettre une réduction de l'envergure des véhicules lors des manoeuvres de garage ou de stationnement, ainsi que pour éviter une destruction ou un arrachement des rétroviseurs en cas de chocs, leur boîtier est généralement monté de manière pivotable sur un cache-embase de fixation sur la portière correspondante.

La liaison de rabattement entre le boîtier d'un rétroviseur et le cache-embase peut être, soit de type monoaxe, c'est-à-dire avec un axe de rotation monté sur le cache-embase et coopérant avec le boîtier, l'ensemble formant une unité de style, soit à deux axes, de sorte que des rétroviseurs permettant d'importantes variations de style peuvent être réalisés.

Les manoeuvres de rabattement volontaires, notamment pour le stationnement, peuvent être effectuées, soit par une action manuelle, soit par mise en oeuvre d'un dispositif motorisé d'entraînement en pivotement du boîtier dans une direction choisie.

Cette capacité de rabattement présente, cependant, l'inconvénient de nécessiter un jeu de fonctionnement entre le boîtier et le cache-embase, afin de permettre un mouvement de rabattement relativement aisé. Il s'ensuit qu'entre le cache-embase et le boîtier est formée une fente constituant un piège aérodynamique ayant pour effet, à partir d'une certaine vitesse de circulation du véhicule équipé de tels rétroviseurs, de provoquer un bruit ou sifflement aérodynamique désagréable et incompatible avec les notions de confort habituelles. En outre, une étanchéité à la pénétration d'air, d'eau ou de poussière à l'intérieure de l'habitacle est également pratiquement impossible à réaliser. Un tel défaut d'étanchéité est d'autant plus pénalisant qu'une pénétration de poussière peut provoquer une usure prématurée des moyens de pivotement du boîtier, alors qu'une pénétration d'eau, en conditions hivernales, peut, non seulement avoir pour conséquence une soudure par gel des parties mobiles entre-elles, mais également une détérioration des différentes parties. De plus, une pénétration d'eau ou d'air à l'intérieur de l'habitacle est totalement inacceptable.

Pour obvier à ces inconvénients, il a été proposé, pour les rétroviseurs à rabattement manuel, de munir le boîtier ou le cache-embase d'un moyen de fermeture de la fente due au jeu fonctionnel. Un tel moyen peut se présenter sous la forme d'un joint déformable, par exemple en mousse, inséré entre les pavies en mouvement relatif, ou encore sous forme d'un élément fixe de fermeture de la fente en position de service du rétroviseur, par exemple une lèvre de recouvrement d'une arête du boîtier ou du cache-embase.

Toutefois, l'insertion d'un joint en mousse entre les parties en mouvement relatif entraîne un renchérissement des rétroviseurs et la fiabilité du joint sur une longue durée, suite à de nombreuses manoeuvres et en tenant compte du vieillissement de la mousse, est très aléatoire. En outre, en cas de rabattément motorisé, la présence d'un joint en mousse entre les parties en mouvement est génératrice d'ennuis de fonctionnement tels que le coincement éventuel du joint entre les arêtes de bord du boîtier et du cache-embase, ainsi que d'une dureté de fonctionnement, notamment des rétroviseurs neufs, entraînant la nécessité de prévoir une motorisation de plus forte puissance.

La prévision d'un élément fixe de fermeture de la fente sous forme d'une lèvre de recouvrement d'une arête du boîtier ou du cache-embase permet, certes, de résoudre le problème du bruit aérodynamique ou sifflement. Mais, cette lèvre est rigide et coopère avec un léger renflement de la partie coopérante, de sorte qu'elle frotte sur ce dernier lors du pivotement et nécessite, pour son dégagement, un léger mouvement vertical simultané du boîtier de rétroviseur lors d'un rabattement. Il résulte d'une telle réalisation quelle est difficilement compatible, voire totalement incompatible avec une motorisation d'un rabattement, sans mise en oeuvre d'un moteur surdimensionné.

De plus, tous les dispositifs d'étanchéité utilisés à ce jour sont sujets à une usure rapide ayant pour conséquence une perte totale d'efficacité correspondante.

Enfin, on connaît, par FR-A-2 711 594, un dispositif d'étanchéité acoustique pour rétroviseur extérieur, qui se présente sous forme d'une pièce tendue sur la face arrière de l'embase et s'appliquant contre l'élément de carrosserie correspondant, ladite pièce étant comprimée à ses bords par un élément de recouvrement de l'embase. Cependant, ce dispositif ne permet aucunement d'assurer une étanchéité au niveau de la liaison entre le boîtier du rétroviseur et l'embase de ce dernier, de manière à empêcher ou à diminuer la formation d'un bruit aérodynamique ou sifflement par pénétration d'air entre ces deux éléments.

La présente invention a pour but de pallier ces inconvénients, en proposant un dispositif d'étanchéité pour rétroviseur extérieur, en particulier de véhicule automobile, permettant une diminution du bruit aérodynamique, par comblement des interstices nécessaires au jeu fonctionnel entre les parties en mouvement relatif, et ainsi d'éviter la formation d'un bruit aérodynamique ou sifflement en situation de déplacement du véhicule, tout en garantissant un rabattement sans entrave du boîtier et une étanchéité parfaite desdites parties entre-elles, ainsi qu'au niveau de la jonction avec la carrosserie.

A cet effet, le dispositif d'étanchéité pour rétroviseur extérieur comportant une embase de fixation sur la portière d'un véhicule automobile, un cache-embase et un boîtier relié de manière pivotante à l'embase, est caractérisé en ce qu'il se présente sous forme d'une pièce intermédiaire unique disposée en sandwich entre l'embase et le cache-embase et s'appliquant contre la face externe du boîtier au niveau du palier de pivotement.

L'invention sera mieux comprise, grâce à la description ci-après, qui se rapporte à un mode de réalisation préféré, donné à titre d'exemple non limitatif. et expliqué avec référence aux dessins schématiques annexés, dans lesquels :
la figure 1 est une vue en perspective d'un rétroviseur muni du dispositif d'étanchéité conforme à l'invention ;
la figure 2 est une vue en perspective du dispositif d'étanchéité seul, vu par son côté coopérant avec l'embase ; la figure 3 est une vue analogue à celle de la figure 2 du dispositif d'étanchéité vu par son côté coopérant avec le cache embase, et
la figure 4 est une vue en coupe partielle à plus grande échelle du dispositif au niveau de la réalisation de l'étanchéité verticale avec le boîtier.

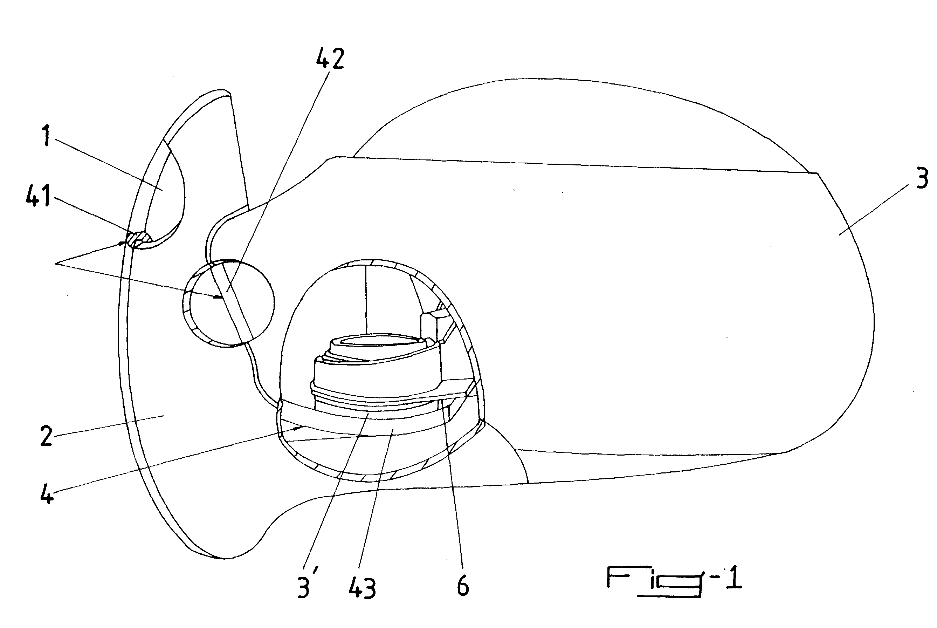

La figure 1 des dessins annexés représente un rétroviseur extérieur. en particulier de véhicule automobile, qui est essentiellement constitué par une embase 1 de montage sur un élément de carrosserie, à savoir une portière du véhicule automobile, par un cache-embase 2 recouvrant ladite embase 1 et solidarisé avec cette dernière ainsi qu'avec ladite portière et par un boîtier 3 monté sur l'embase 1 par l'intermédiaire d'un palier de pivotement 3'.

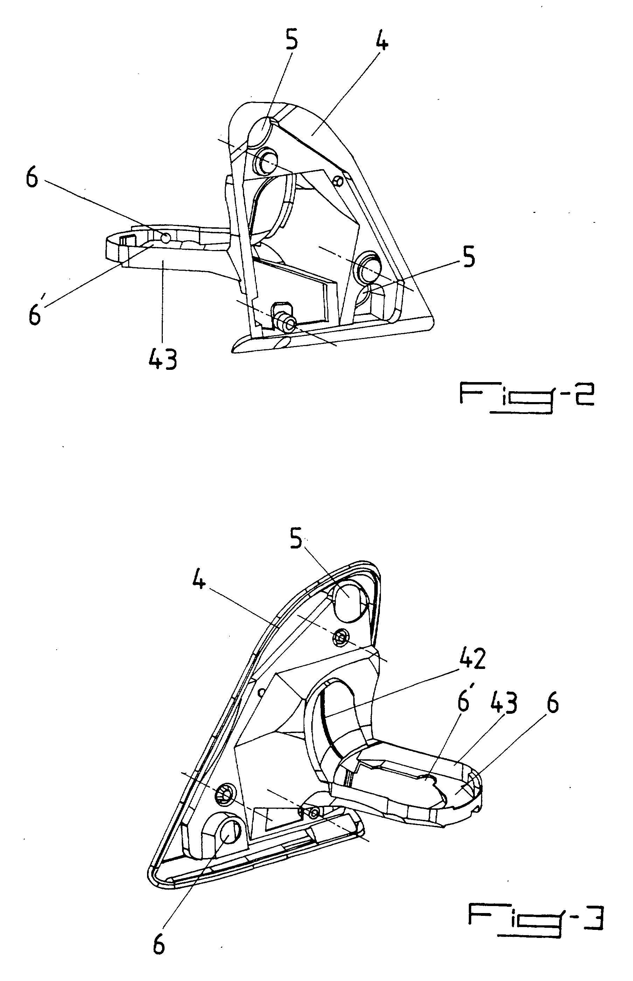

Conformément à l'invention, et comme le montrent les figures 1 à 4, ce rétroviseur est muni d'un dispositif d'étanchéité se présentant sous forme d'une pièce intermédiaire unique 4 disposée en sandwich entre l'embase 1 et le cache-embase 2 et s'appliquant contre la face externe du boîtier 3 au niveau du palier de pivotement 3'.

Selon une caractéristique de l'invention, la pièce intermédiaire unique 4 formant le dispositif d'étanchéité est avantageusement constituée en une matière souple du type caoutchouc thermoplastique d'une dureté shore d'environ 50 à 60.

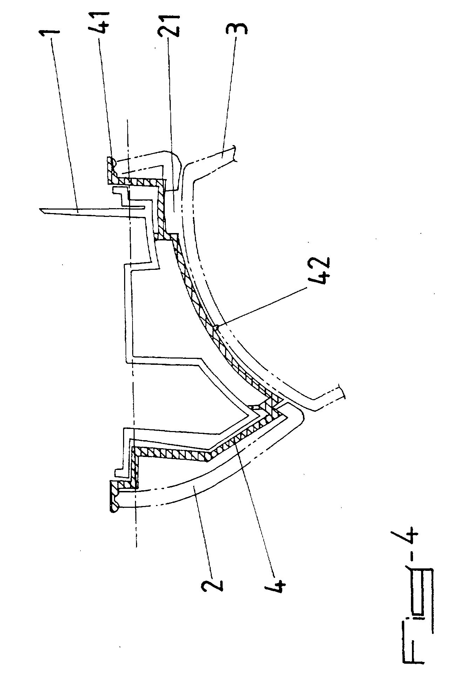

Cette pièce intermédiaire 4 recouvre totalement l'ensemble de la surface de l'embase 1 et de ses parties saillantes et présente, d'une part, une semelle périphérique 41 d'appui sur l'élément de carrosserie correspondant, coopérant avec une arête périphérique correspondante du cache-embase 2 (figures 1 et 4) et, d'autre part, un moyen vertical 42 d'étanchéité entre le boîtier 3 et le cache-embase 2 (figures 3 et 4) et un moyen horizontal 43 d'étanchéité entre ledit boîtier 3 et ledit cache-embase 2 (figures 1 à 3). Ainsi, l'embase 1 est recouverte par la pièce intermédiaire 4 à la manière d'un gant, de sorte que l'étanchéité entre l'embase 1, d'une part, et le cache-embase 2 et le boîtier 3, d'autre part, est parfaitement assurée. En effet, la semelle périphérique 41, d'une part, s'appuie sur l'élément de carrosserie correspondant et, d'autre part, coopère avec l'arête périphérique du cache-embase 2. Il en résulte que, par la fixation de ce dernier sur l'embase 1, la semelle périphérique 41 est pressée contre la partie correspondante de la carrosserie à la manière d'un joint d'étanchéité usuel.

Afin de permettre le montage du cache-embase 2 et du boîtier 3 sur l'embase 1, la pièce intermédiaire 4 est munie, d'une part, de trous 5 de passage des moyens de fixation et de centrage dudit cache-embase 2 sur l'embase 1 et, d'autre part, d'un logement 6 pourvu d'une ouverture 6' pour le positionnement et le montage du palier de pivotement 3' du boîtier 3 (figures 1 à 3). Ainsi, ces trous 5 et ouverture 6' peuvent être adaptés aux dimensions des moyens de fixation et du palier de pivotement 3', de sorte que l'étanchéité au niveau de ces points de liaison entre les différentes parties constitutives du rétroviseur peut toujours être assurée.

Conformément à une autre caractéristique de l'invention, le moyen vertical 42 d'étanchéité entre le boîtier 3 et le cache-embase 2 (figures 3 et 4) est avantageusement constitué par une nervure en saillie sur une partie de surface de la pièce intermédiaire 4 traversant une découpe correspondante 21 dudit cache-embase 2, ladite nervure s'appuyant contre la surface correspondante du boîtier 3 (figures 1 et 4). Ce mode de réalisation de l'étanchéité verticale entre le boîtier 3 et l'ensemble embase 1 - cache-embase 2 permet d'assurer un contact continu entre les pièces mobiles relativement, en toutes positions de service du rétroviseur, à savoir en position normale de réflexion de l'image de la partie de l'espace arrière correspondant et en position de rabattement ou d'éjection avant et arrière, et ainsi, d'éviter tout passage d'air entre le boîtier 3 et ledit ensemble, de sorte que le bruit ou sifflement aérodynamique résultant habituellement d'une infiltration d'air entre les différentes parties est totalement supprimé.

Le moyen horizontal 43 d'étanchéité entre le boîtier 3 et le cache-embase 2 (figures 1 à 3) est constitué, de préférence, par une lèvre périphérique verticale, élastiquement déformable, délimitant le logement 6 pourvu de l'ouverture 6' pour le positionnement et le montage du palier de pivotement 3' du boîtier 3, cette lèvre s'appuyant contre la face inférieure correspondante du boîtier 3. Du fait de la possibilité de déformation élastique de la lèvre formant le moyen horizontal d'étanchéité 43, cette dernière effectue un rattrapage automatique du jeu de montage entre l'ensemble embase 1 - cache-embase 2 et le boîtier 3.

Ainsi, la lèvre formant le moyen horizontal d'étanchéité 43 suit continuellement le mouvement du boîtier 3 sur le cache-embase 2 et assure, lors d'un pivotement du boîtier 3 sur le cache-embase 2, le comblement de la fente déterminée entre ledit boîtier 3 et le cache-embase 2 au niveau du plan d'articulation, en permettant même un léger déplacement vertical du boîtier 3 par rapport au cache-embase 2, du fait de sa déformation élastique. Cette possibilité de déformation de la lèvre formant le moyen horizontal d'étanchéité 43 assure donc une fermeture optimale de la fente, même en tenant compte de fluctuations possibles du jeu de fonctionnement. Il en résulte une réduction optimale des bruits ou sifflements aérodynamiques.

En outre, les moyens d'étanchéité vertical 42 et horizontal 43 permettent d'empêcher toute pénétration d'eau ou de poussières à l'intérieur du cache-embase 2 et du boîtier 3, de sorte que la migration de celles-ci vers l'intérieur du véhicule ou vers des surfaces mobiles en contact est évitée. Il en résulte que les risques de dégradation par usure prématurée sont également supprimés.

Grâce à l'invention, il est possible de réaliser un rétroviseur rabattable, motorisé ou non, dont le bruit ou sifflement aérodynamique est notablement réduit par rapport aux rétroviseurs existants de ce type, ce sans que le fonctionnement de rabattement soit affecté. En outre, la mise en oeuvre du dispositif d'étanchéité conforme à l'invention peut être effectuée rapidement et efficacement, sans nécessiter une qualification spécifique et avec une répétitivité parfaite, de sorte que le prix de revient d'un rétroviseur ainsi équipé reste sensiblement identique à celui des rétroviseurs non équipés et est en tout cas inférieur à celui des rétroviseurs pourvus des moyens connus de réduction du bruit, qui sont généralement mis en place et collés manuellement.

En outre, ce mode de réalisation permet pratiquement d'obstruer complètement, de manière étanche, la fente déterminée entre le boîtier 3 et le cache-embase 2 au niveau de leur plan d'articulation, sans entraver pour autant le bon fonctionnement du rétroviseur en ce qui concerne ses possibilités de rabattement avant et arrière et la remise en position de service, manuelle ou motorisée. Enfin, le mode de réalisation conforme à l'invention permet un fonctionnement particulièrement fiable et pratiquement sans usure du dispositif.

Bien entendu, l'invention n'est pas limitée au mode décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif d'étanchéité pour rétroviseur extérieur, en particulier de véhicule automobile, essentiellement constitué par une embase (1) de montage sur un élément de carrosserie, à savoir une portière du véhicule automobile, par un cache-embase (2) recouvrant ladite embase (1) et solidarisé avec cette dernière ainsi qu'avec ladite portière et par un boîtier (3) monté sur l'embase (1) par l'intermédiaire d'un palier (3'), **caractérisé en ce qu'**il se présente sous forme d'une pièce intermédiaire unique (4) disposée en sandwich entre l'embase (1) et le cache-embase (2) et s'appliquant contre la face externe du boîtier (3) au niveau du palier de pivotement (3').

2. Dispositif d'étanchéité, suivant la revendication 1, **caractérisé en ce que** la pièce intermédiaire unique (4) formant le dispositif d'étanchéité est constituée en une matière souple du type caoutchouc thermoplastique d'une dureté shore d'environ 50 à 60.

3. Dispositif d'étanchéité, suivant la revendication 1, **caractérisé en ce que** la pièce intermédiaire (4) recouvre totalement l'ensemble de la surface de l'embase (1) et de ses parties saillantes et présente, d'une part, une semelle périphérique (41) d'appui sur l'élément de carrosserie correspondant, coopérant avec une arête périphérique correspondante du cache-embase (2) et, d'autre part, un moyen vertical (42) d'étanchéité entre le boîtier (3) et le cache-embase (2) et un moyen horizontal (43) d'étanchéité entre ledit boîtier (3) et ledit cache-embase (2).

4. Dispositif d'étanchéité, suivant l'une quelconque des revendications 1 et 3, **caractérisé en ce que** la pièce intermédiaire (4) est munie, d'une part, de trous (5) de passage des moyens de fixation et de centrage dudit cache-embase (2) sur l'embase (1) et, d'autre part, d'un logement (6) pourvu d'une ouverture (6') pour le positionnement et le montage du palier (3') du boîtier (3).

5. Dispositif d'étanchéité, suivant la revendication 3, **caractérisé en ce que** le moyen vertical (42) d'étanchéité entre le boîtier (3) et le cache-embase (2) est constitué par une nervure en saillie sur une partie de surface de la pièce intermédiaire (4) traversant une découpe correspondante (21) dudit cache-embase (2), ladite nervure s'appuyant contre la surface correspondante du boîtier (3).

6. Dispositif d'étanchéité, suivant l'une quelconque des revendications 1 et 3, **caractérisé en ce que** le moyen horizontal (43) d'étanchéité entre le boîtier (3) et le cache-embase (2) est constitué par une lèvre périphérique verticale, élastiquement déformable, délimitant le logement (6) pourvu de l'ouverture (6') pour le positionnement et le montage du palier (3') du boîtier (3), cette lèvre s'appuyant contre la face inférieure correspondante du boîtier (3).

## Patentansprüche

1. Dichtvorrichtung für einen Außenrückspiegel, insbesondere für Kraftfahrzeuge, im wesentlichen bestehend aus einem Sockel (1) zur Befestigung an einem Karosserieelement, nämlich einer Kraftfahrzeugtür, einer Sockelabdeckung (2), die den Sockel (1) überdeckt und mit diesem sowie der Tür verbunden ist und einem mittels eines Klappgelenks (3') mit dem Sockel (1) verbundenen Gehäuse (3), **dadurch gekennzeichnet, daß** ein einheitliches Zwischenelement (4) zwischen dem Sockel (1) und der Sockelabdeckung (2) sandwichartig angeordnet ist und an der Außenfläche des Gehäuse (3) im Bereich des Klappgelenks (3') anliegt.

2. Dichtvorrichtung nach Anspruch 1, **dadurch gekennzeichnet, daß** das einheitliche Zwischenelement (4), das die Dichtvorrichtung bildet, aus einem weichen Material, beispielsweise thermoplastischem Kautschuk, mit einer Shore-Härte von ungefähr 50 bis 60 besteht.

3. Dichtvorrichtung nach Anspruch 1, **dadurch gekennzeichnet, daß** das einheitliche Zwischenelement (4) vollständig die Gesamtheit der Oberfläche des Sockels (1) und seiner vorspringenden Teile bedeckt und einerseits eine ringförmige Anlagefläche (41) am entsprechenden Karosserieelement aufweist, das mit einer entsprechenden Umfangskante der Sockelabdeckung (2) zusammenwirkt und andererseits ein senkrechtes Dichtteil (42) zwischen dem Gehäuse (3) und der Sockelabdeckung (2) sowie ein waagerechtes Dichtteil (43) zwischen dem Gehäuse (3) und der Sockelabdeckung (2) umfaßt.

4. Dichtvorrichtung nach einem der Ansprüche 1 bis 3, **dadurch gekennzeichnet, daß** das einheitliche Zwischenelement (4) einerseits mit Durchgangslöchern (5) für Befestigungs- und Zentrierelemente der Sockelabdeckung (2) auf dem Sockel (1) und andererseits einer Aufnahme (6) mit einer Öffnung (6') zum Positionieren und zur Montage des Klappgelenks (3') des Gehäuses (3) versehen ist.

5. Dichtvorrichtung nach Anspruch 3, **dadurch gekennzeichnet, daß** das senkrechte Dichtteil (42) zwischen dem Gehäuse (3) und der Sockelabdeckung (2) aus einer aus einem Bereich der Oberfläche des einheitlichen Zwischenelements (5) hervorstehenden und eine entsprechende Öffnung (21) der Sockelabdeckung (2) durchgreifenden, sich auf einer entsprechenden Fläche des Gehäuses (3) abstützenden Rippe (3) besteht.

6. Dichtvorrichtung nach einem der Ansprüche 1 bis 3, **dadurch gekennzeichnet, daß** das waagerechte Dichtelement (43) zwischen dem Gehäuse (3) und der Sockelabdeckung (2) aus einer senkrechten, umlaufenden, elastisch verformbaren Lippe besteht, die die Aufnahme (6) mit der Öffnung (6') zum Positionieren und zur Montage des Klappgelenks (3') des Gehäuses (3) begrenzt und sich auf der unteren, entsprechenden Fläche des Gehäuses (3) abstützt.

## Claims

1. Sealing device for an external rear-view mirror, in particular for a motor vehicle, essentially consisting of a base (1) for mounting on a part of the bodywork, namely a door of the motor vehicle, abase cover (2) which covers the said base (1) and is jointed to the latter as well as to the said door, and a housing (3) mounted on the base (1) by means of a bearing (3'), **characterised in that** it takes the form of a single intermediate piece (4) sandwiched between the base (1) and the base cover (2) and applied against the external face of the housing (3) at the level of the pivot bearing (3').

2. Sealing device as claimed in Claim 1, **characterised in that** the single intermediate piece (4) forming the sealing device is formed from a flexible material of the thermoplastic rubber type with a Shore hardness of approximately 50 to 60.

3. Sealing device as claimed in Claim 1, **characterised in that** the intermediate piece (4) totally covers the whole of the surface of the base (1) and of its projecting parts and has, on the one hand, a peripheral flange (41) for support on the corresponding part of the bodywork, co-operating with a corresponding peripheral edge of the base cover (2) and, on the other hand, a vertical sealing means (42) between the housing (3) and the base cover (2) and a horizontal sealing means (43) between the said housing (3) and the said base cover (2).

4. Sealing device as claimed in any one of Claims 1 to 3, **characterised in that** the intermediate piece (4) is equipped, on the one hand, with holes (5) for the passage of means for fixing and centring of the said base cover (2) on the base (1) and, on the other hand, a compartment (6) provided with an opening (6') for positioning and mounting of the bearing (3') of the housing (3).

5. Sealing device as claimed in Claim 3, **characterised in that** the vertical sealing means (42) between the housing (3) and the base cover (2) is formed by a rib projecting on a part of the surface of the intermediate piece (4) passing through a corresponding cut-out (21) of the said base cover (2), the said rib resting against the corresponding surface of the housing (3).

6. Sealing device as claimed in any one of Claims 1 and 3, **characterised in that** the horizontal sealing means (43) between the housing (3) and the base cover (2) is formed by a vertical peripheral lip which is resiliently deformable and delimits the compartment (6) provided with the opening (6') for positioning and mounting of the bearing (3') of the housing (3), this lip resting against the corresponding lower face of the housing (3).
